(19) Europäisches Patentamt
European Patent Office
Office européen des brevets

(11) EP 0 575 862 B1

(12) EUROPEAN PATENT SPECIFICATION

(45) Date of publication and mention
of the grant of the patent:
29.04.1998   Bulletin 1998/18

(51) Int Cl.⁶: H04N 5/44

(21) Application number: 93109516.0

(22) Date of filing: 15.06.1993

(54) **Method and apparatus for adaptive interpolation**

Verfahren und Vorrichtung zur adaptiven Interpolation

Méthode et appareil d'interpolation adaptive

(84) Designated Contracting States:
DE ES FR GB IT

(30) Priority: 22.06.1992  EP 92401745

(43) Date of publication of application:
29.12.1993   Bulletin 1993/52

(73) Proprietor: THOMSON multimedia
92648 Boulogne Cédex (FR)

(72) Inventor: Boie, Werner
F-67100 Strasbourg (FR)

(74) Representative:
Hartnack, Wolfgang, Dipl.-Ing. et al
Deutsche Thomson-Brandt GmbH
Licensing & Intellectual Property,
Göttinger Chaussee 76
30453 Hannover (DE)

(56) References cited:
EP-A- 0 169 527        EP-A- 0 227 190

## Description

The present invention relates to a method and to an apparatus for adaptive interpolation.

Spatial Proscan converted interlace pictures (interlace → progressive) exhibit in general unsharp vertical transitions along horizontal structures and show only an insignificant reduction of interlace flicker. This is normally due to a vertical interpolation or a simple vertical average over two lines applied at horizontal structures. The result of that kind of upconversion is very often that the original interlace pictures look better than the upconverted ones. On the other hand spatio-temporal upconversion algorithms can only work for a certain range of velocities of moving objects in an acceptable way. For greater velocities these algorithms come up with an intolerable temporal lag making the contours of the moving objects rather unsharp. Many proposals exist with a combination of different optimized processing modes for moving or still picture parts, but the included motion detector problems have not been completely solved up to now.

EP-A-0 169 527 discloses a proscan interpolation in which the value for a current pixel is selected or interpolated from the values of the two vertically adjacent pixels of the original lines. This selection or interpolation is based on the correlation between the two original pixels and is modified using the correlation between the upper of these pixels and a pixel from the previous field which is temporally adjacent to the current pixel. EP-A-0 227 190 also discloses a proscan interpolation in which the value for a current pixel is taken from either of the values of the two vertically adjacent pixels of the original lines. The selection is based on the difference between the two original pixels, the absolute value of which is also compared to a first reference level. The selection also depends on a comparison between the value of a pixel from the previous field which is temporally adjacent to the current pixel and a second reference level which can be identical to the first reference level. In case the absolute value of said difference is below the first reference level the average of the values of the vertically adjacent pixels is taken as the value for the current pixel.

It is one object of the invention to disclose a method for adaptively weighted interpolation with improved vertical sharpness. This object is realised by the method disclosed in claim 1.

An adaptively weighted vertical interpolation is used which depends on the estimated position of the vertical transition in the picture. For that reason, the information of the preceding and/or succeeding field of the interlace signal is taken into account. That allows a significantly improved sharpness and a drastic reduction of interlace flicker for at least still picture parts. Also in moving picture parts a significant improvement of sharpness is possible.

The missing lines of an interlace field are calculated by an adaptively weighted vertical interpolation by means of only two adjacent lines in the current field. The algorithm allows only for the interpolated values to be within the amplitude range between the two adjacent lines of the interlace field. The main task of this kind of interpolation algorithm consists therefore of finding two proper weighting factors. Advantageously the weighting factors are calculated or estimated by means of the information of the adjacent fields.

The inventive upconversion has several advantages over other known spatio-temporal or motion adaptive upconversion techniques:

- Since only two pixels of the two adjacent lines of the interlace field are involved in the upconversion filter no temporal lag can arise. The full sharpness of moving objects will be preserved;

- The evaluation of the weighting factors is a continuous process. Neither hard decisions like in the DIAG3X algorithm described in EP-A-0 561 286 nor non-linearities with discontinuities can occur. This approach ensures per se a better noise immunity;

- Only one algorithm is used. This avoids the need of a motion detector and all the problems accompanied by it. For that reason switching artefacts like busy edges, impairments in form of combing, halo effects, mixed modes, etc. will not arise;

- The algorithm allows a high vertical sharpness. The processed pictures can lead even to the impression of a real progressively scanned picture picked up with a fine spot. In contrast to that, interlace pictures are normally generated with a larger spot size so that even after field insertion the complete frame cannot a look as sharp as the progressive scanned one;

- If, as a worst case, the weighting factors were evaluated completely wrongly, only some line repetition artefacts could occur.

A fundamental drawback of this algorithm could be seen in the fact that the vertical resolution cannot be improved as it is the case for a temporal interpolation, e.g. for a simple field insertion technique, but just these high vertical frequencies cause the serious motion detector problems. If the high vertical frequencies in the pictures cannot be up-converted correctly the interlace flicker will remain. This is still regarded as less critical compared with the distortions caused by a wrong decision of the motion detector. Further, television should be concerned with moving pictures. Therefore it is more worthwhile improving the quality of moving images.

As already mentioned above the inventive adaptive vertical interpolation will only involve the pixels in two adjacent lines according to the formula (with simplified notation):

$$Y^*(y, t) = [\alpha^*Y(y-d, t) + \beta^*Y(y+d, t)] / (\alpha+\beta).$$

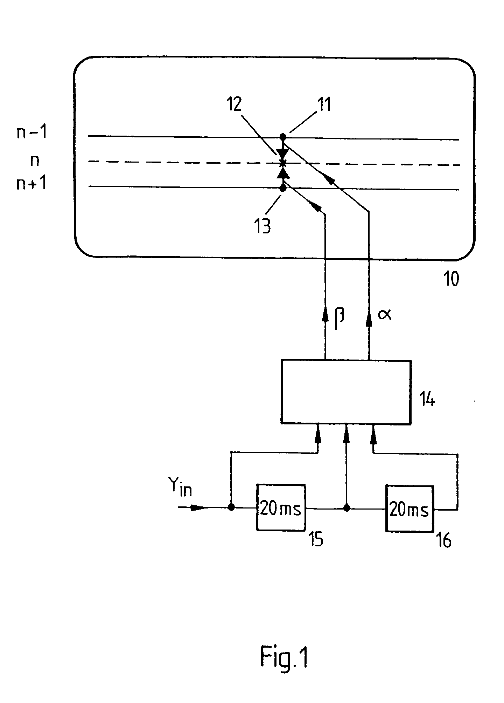

Herein the vertical interpolation is controlled by two weighting factors $\alpha$ and $\beta$ which themselves depend on the picture information of the current and the (two) adjacent field(s). Fig. 1 gives an overview of the principal processing.

In principle the inventive method consists in a kind of adaptive interpolation, whereby pixel values of a current line to be interpolated are calculated from respective values of vertically adjacent pixels of adjacent lines of the current field, and the values of said adjacent pixels are adaptively weighted according to one or more gradients of respectively located pixel values of one or two temporally adjacent fields for calculating said pixel values of said lines to be interpolated.

Advantageous additional embodiments of the inventive method are claimed in the dependent claims.

It is a further object of the invention to disclose an apparatus which utilizes the inventive method. This object is realised by the apparatus disclosed in claim 7.

Preferred embodiments of the invention are described with reference to the accompanying drawings, which show in:

Fig. 1    principle of the inventive interpolation;
Fig. 2    vertical transition;
Fig. 3    fine vertical detail;
Fig. 4    finest vertical detail;
Fig. 5    block diagram of an inventive interpolator.

On a display 10 in Fig. 1 three lines n-1, n (to interpolate) and n+1 are depicted. Pixel 12 on line n is to be interpolated from pixel 11 of line n-1 and from pixel 13 of line n+1. The values of luminance input pixels Yin and such values having been delayed in a first field store 15 and such values having been further delayed in a second field store 16 are fed to an evalucircuit 14 in which the weighting factors $\alpha$ and $\beta$ are calculated.

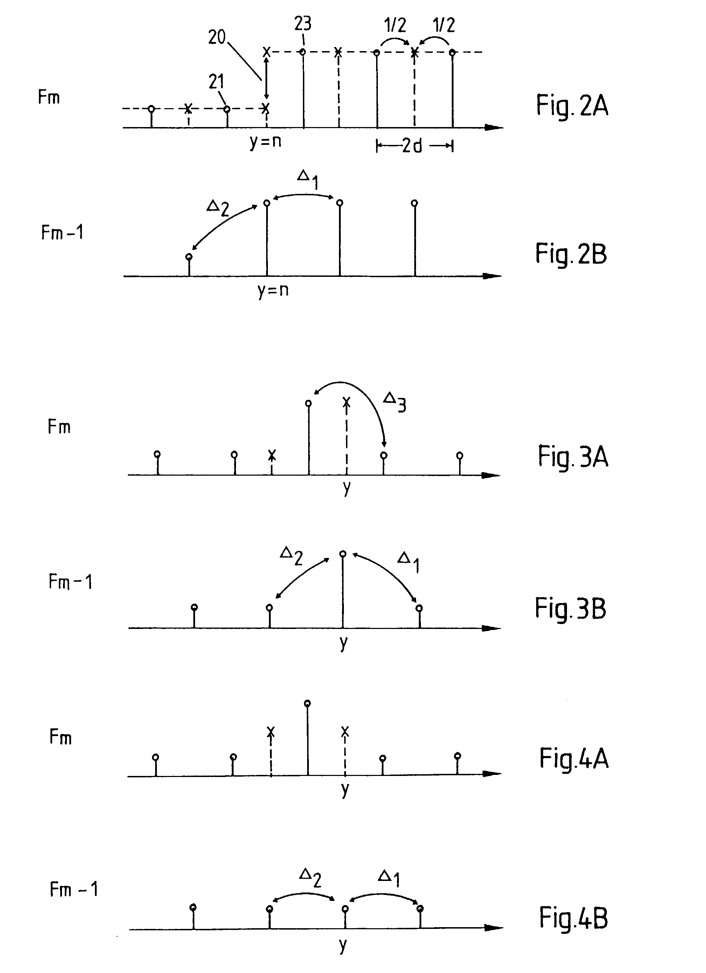

Fig. 2 can be used for explaining the evaluation of $\alpha$ and $\beta$. In Fig. 2A a vertical transition at y=n in an interlace field Fm is shown. In the transition region 20 one will find a range of uncertainty in which the pixel value of the missing line n could exist. This region of uncertainty can be significantly reduced by means of the information of the previous field Fm-1 provided that there is no movement in this picture part. By measuring the vertical gradient $\Delta_1$ in the upper and the vertical gradient $\Delta_2$ in the lower direction in this field Fm-1 with respect to the line y=n to be interpolated (see Fig. 2B) these gradients

$$\Delta_{1a} = Y(y+2d, t-T_t) - Y(y, t-T_t)$$

and

$$\Delta_{2a} = Y(y, t-T_t) - Y(y-2d, t-T_t),$$

$T_t$ = 20ms, 2d = line distance within a field, can be utilized for the evaluation of $\alpha$ and $\beta$ such that

$$\alpha = |\Delta_{1a}| + \varepsilon$$

and

$$\beta = |\Delta_{2a}| + \varepsilon.$$

In these formulae $\varepsilon$ represents only a small figure, e.g. 1 LSB, just to provide a reasonable result if $\Delta_1$ and $\Delta_2$ become zero.

The finest vertical detail, which can be processed correctly by this technique, is given by a width of two lines as it is illustrated in Fig. 3A and 3B. For a correct interpolation a modification has to be introduced which forces $\Delta_1$ or $\Delta_2$ to zero if a sign of these gradients is different from the sign of the gradient $\Delta_3$ = Y(y+d, t) - Y(y-d, t) in the current field. That means:
if $\Delta_3 \geq 0$
$\underline{\Delta}_{1a}$ = Maximum ($\Delta_{1a}$, 0)
$\underline{\Delta}_{2a}$ = Maximum ($\Delta_{2a}$, 0) else
$\underline{\Delta}_{1a}$ = Minimum ($\Delta_{1a}$, 0)
$\underline{\Delta}_{2a}$ = Minimum ($\Delta_{2a}$, 0).

In case of finer vertical details the algorithm turns into a simple vertical average as it is depicted in Fig. 4A and 4B. In the given situation both gradients $\Delta_1$ and $\Delta_2$ become zero.

Tests of this algorithm have turned out a significantly improved sharpness, but for some certain movements a staircase structure with a step size of two lines can occur (line repetition artefact). This artefact was found mainly due to the asymmetric temporal evaluation of $\alpha$ and $\beta$. Therefore the processing is advantageously extended also in the other temporal direction (field Fm+1) in which a second set of $\Delta_1$ and $\Delta_2$ is evaluated according to the formula:

$$\Delta_{1b} = Y(y+2d, t+T_t) - Y(y, t+T_t)$$

$$\Delta_{2b} = Y(y, t+T_t) - Y(y-2d, t+T_t)$$

with the same modification depending on $\Delta_3$. The weighting factors are then given by:

$$\alpha = |\underline{\Delta}_{1a}| + |\underline{\Delta}_{1b}| + \varepsilon$$

$$\beta = |\underline{\Delta}_{2a}| + |\underline{\Delta}_{2b}| + \varepsilon.$$

The results of this improved algorithm have indicated that the motion portrayal is better by the symmetrical temporal evaluation of $\alpha$ and $\beta$, but there are still some staircase artefacts along certain moving diagonal structures. Different solutions are possible to overcome these distortions. A detection of a moving diagonal structure or a pattern recognition of the stair-cases in the reconstructed frame would be quite helpful, but rather complex.

A simpler solution is to force the adaptive interpolation softly to a vertical average depending on the movement. An indication of movement is already given by the changing gradient $\Delta_1$ and $\Delta_2$ from frame to frame so that a motion indicating factor can be specified by:

$$\sigma = [|\Delta_{1a} - \Delta_{1b}| + |_{2a} - \Delta_{2b}|] / \text{Maximum}(\Sigma|\Delta_i|, \delta),$$

with

$$\Sigma|\Delta_i| = |\Delta_{1a}| + |\Delta_{1b}| + |\Delta_{2a}| + |\Delta_{2b}|, \delta = 1 \text{ LSB}.$$

The weighting factors then become:

$$\alpha = (1-\sigma)\left(\left|\Delta_{1a}\right| + \left|\Delta_{1b}\right|\right) + \sigma^* \Sigma\left|\Delta_i\right| + \varepsilon$$

$$\beta = (1-\sigma)\left(\left|\Delta_{2a}\right| + \left|\Delta_{2b}\right|\right) + \sigma^* \Sigma\left|\Delta_i\right| + \varepsilon$$

For a better noise immunity and for an improved efficiency a second term is introduced in these equations in order to force the weighting coefficients stronger to a balance. For the same reason $\varepsilon$ has been increased to five in an 8 bit processing scheme.

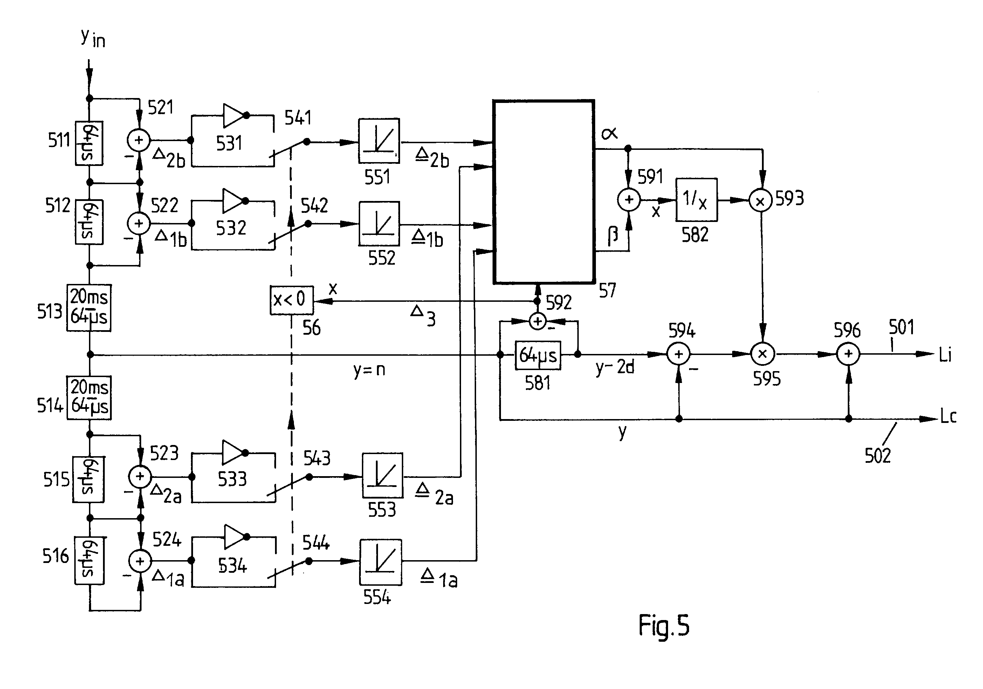

Fig. 5 shows the block diagram for an interpolator using the described algorithm. The values of luminance input pixels Yin are fed to a first subtractor 521 and are passed through a first line delay 511, a second line delay 512, a first field-minus-line delay 513, a second field-minus-line delay 514 and a third line delay 515 to a fourth line delay 516. The output of the first line delay 511 is subtracted in the first subtractor 521 from the input of this line delay. The output of the second line delay 512 is subtracted in a second subtractor 522 from the input of this line delay.

The output of the third line delay 515 is subtracted in a third subtractor 523 from the input of this line delay. The output of the fourth line delay 516 is subtracted in a fourth subtractor 524 from the input of this line delay.

The output signal $\Delta_{2b}$ of the first subtractor 521 is either directly or via a first inverter 531 passed through a first switch 541 and a first limiter 551 (output signal $\underline{\Delta}_{2b}$) to an arithmetic circuit 57 for calculating $\alpha$ and $\beta$. The output signal $\Delta_{1b}$ of the second subtractor 522 is either directly or via a second inverter 532 passed through a second switch 542 and a second limiter 552 (output signal $\underline{\Delta}_{1b}$) to the arithmetic circuit 57. The output signal $\Delta_{2a}$ of the third subtractor 523 is either directly or via a third inverter 533 passed through a third switch 543 and a third limiter 553 (output signal $\underline{\Delta}_{2a}$) to the arithmetic circuit 57. The output signal $\Delta_{1a}$ of the fourth subtractor 524 is either directly or via a fourth inverter 534 passed through a fourth switch 544 and a fourth limiter 554 (output signal $\underline{\Delta}_{1a}$) to the arithmetic circuit 57.

At the output of the first field-minus-line delay 513 the pixel values of the current line (y=n, Lc) are available and fed to output 502. These pixels are also passed through a fifth line delay 581, a fifth subtractor 594, a first multiplier 595 and a first adder 596 to output 501 which outputs pixel values of the interpolated line Li.

The output of the fifth line delay is subtracted in a sixth subtractor 592 from the input of this line delay. The output of this subtractor represents the gradient $\Delta_3$ of the current field and is also fed to the arithmetic circuit 57 and to a switch control 56 which controls simultaneously the four switches. In the arithmetic circuit 57 the weighting factors $\alpha$ and $\beta$ are calculated from the described input signals, with or without usage of the motion indication factor $\sigma$.

For calculating Y* the formula$(a^*A + b^*B) / (a+b)$ can be changed to:
$$= (a^*A + b^*B + a^*B - a^*B) / (a+b)$$
$$= (a(A-B) + (a+b)B) / (a+b)$$
$$= (a/(a+b))^*(A-B) + B.$$

The latter formula can be used advantageously to calculate the interpolated pixel values 11. The $\alpha$ and $\beta$ outputs of arithmetic circuit 57 are added in a second adder 591. The adder output passes through a reciprocal value circuit 582 and becomes multiplied in a second multiplier 593 with value $\alpha$. The output of this multiplier delivers the second input for the first multiplier 595. The input of the fifth line delay 581 is subtracted from the output of this line delay in the fifth subtractor 594 and is added in the first adder 596 to the output of the first multiplier 595.

Also more than two directly vertically adjacent pixels can be used for the inventive interpolation.

The invention can be applied to TV's, VCR's and also to chrominance signals.

The results of the inventive interpolation have shown that the enhancement of sharpness and the interlace flicker reduction is very obvious in picture sequences which contain a zoom of fine details. In test charts like the 'Philips test chart' the interlace flicker can be completely removed.

The proposed adaptive vertical interpolation comes up with a significantly improved picture sharpness and interlace flicker reduction compared with the DIAG3X algorithm described in EP-A-0 561 286. The proposed algorithm offers a very sensible compromise between hardware complexity, vertical resolution, vertical sharpness and remaining artefacts. The picture quality is not compromized by new artefacts introduced by the upconversion algorithm.

## Claims

1. Method for adaptive interpolation, wherein the value of a current pixel (12) of a current line (y, n, Li) to be interpolated is calculated using an adaptively weighted value of a first pixel (11) located above the current pixel in the adjacent line of the current field (Fm) and an adaptively weighted value of a second pixel (13) located below the current pixel in the adjacent line of the current field (Fm), wherein the weighting factors ($\alpha$, $\beta$) are calculated using a first gradient ($\Delta_3$) between the value of said second pixel and the value of said first pixel, **characterised** in that the calculation of the first weighting factor ($\alpha$) for said first pixel value (11) is based on a second gradient ($\Delta_1$) between the value of a fourth pixel of the previous field (Fm-1) located spatially below a third pixel, said third pixel being located at the same spatial position as the current pixel but in the previous field (Fm-1), and that the calculation for the second weighting factor ($\beta$) for said second pixel value (13) is based on a third gradient ($\Delta_2$) between the value of said third pixel and the value of a fifth pixel of the previous field (Fm-1) located spatially above said third pixel, and wherein the value of each of said second ($\Delta_1$) and third ($\Delta_2$) gradients is modified if a sign of the respective one of said second and third gradients differs from the sign of said first gradient ($\Delta_3$).

2. Method according to claim 1, wherein a small quantity ($\epsilon$), e.g. 1 LSB, is added to the absolute value of said second and third gradients ($\Delta_1$, $\Delta_2$) to form said first and second weighting factors.

3. Method according to claim 1 or 2, wherein, if said first gradient ($\Delta_3$) is greater than or equal to zero the modified second gradient ($\underline{\Delta}_{1a}$) equals the maximum of said second gradient ($\Delta_{1a}$) and zero, and the modified third gradient ($\underline{\Delta}_{2a}$) equals the maximum of said third gradient ($\Delta_{2a}$) and zero, and wherein, if said first gradient ($\Delta_3$) is less than zero the modified second gradient ($\underline{\Delta}_{1a}$) equals the minimum of said second gradient ($\Delta_{1a}$) and zero, and the modified third gradient ($\underline{\Delta}_{2a}$) equals the minimum of said third gradient ($\Delta_{2a}$) and zero.

4. Method according to claim 3, wherein, according to said second and third modified gradients, a fourth ($\underline{\Delta}_{1b}$) and a fifth ($\underline{\Delta}_{2b}$) modified gradient are calculated using respective pixel values from the field (Fm+1) following said current field (Fm) in a manner analogous to the second and third gradients, and wherein said first weighting factor ($\alpha$) includes the absolute values of said second ($\underline{\Delta}_{1a}$) and fourth ($\underline{\Delta}_{1b}$) modified gradients and said second weighting factor ($\beta$) includes the absolute values of said third ($\underline{\Delta}_{2a}$) and fifth ($\underline{\Delta}_{2b}$) modified gradients.

5. Method according to claim 4, wherein said first and second weighting factors ($\alpha$, $\beta$) are modified using a motion indicating factor which is calculated using the absolute values of the difference between said second ($\Delta_{1a}$) and fourth ($\Delta_{1b}$) gradients and the difference between said third ($\Delta_{2a}$) and fifth ($\Delta_{2b}$) gradients.

6. Apparatus for adaptive interpolation, comprising means (582, 591, 593-596) for calculating the value of a current pixel (12) of a current line (y, n, Li) to be interpolated using an adaptively weighted value of a first pixel (11) located above the current pixel in the adjacent line of the current field (Fm) and an adaptively weighted value of a second pixel (13) located below the current pixel in the adjacent line of the current field (Fm), wherein the weighting factors ($\alpha$, $\beta$) are calculated using a first gradient ($\Delta_3$) between the value of said second pixel and the value of said first pixel, **characterised** in that the means (582, 591, 593-596) for calculating the value of the current pixel further comprises means (511-516, 522, 524, 581, 592, 57) for calculating the first weighting factor ($\alpha$) for said first pixel value (11) using a second gradient ($\Delta_1$) between the value of a fourth pixel of the previous field (Fm-1) located spatially below a third pixel, said third pixel being located at the same spatial position as the current pixel but in the previous field (Fm-1), and that the means (582, 591, 593-596) for calculating the value of the current pixel further comprises means (511-516, 521, 523, 581, 592, 57) for calculating the second weighting factor ($\beta$) for said second pixel value (13) using a third gradient ($\Delta_2$) between the value of said third pixel and the value of a fifth pixel of the previous field (Fm-1) located spatially above said third pixel, and wherein the apparatus further comprises means (56, 531-534, 541-544, 551-554) for modifying the value of each of said second ($\Delta_1$) and third ($\Delta_2$) gradients if a sign of the respective one of said second and third gradients differs from the sign of said first gradient ($\Delta_3$).

## Patentansprüche

1. Verfahren zur adaptiven Interpolation, bei dem der Wert eines zu interpolierenden gegenwärtigen Pixels (12) einer gegenwärtigen Zeile (y, n, Li) unter Verwendung eines adaptiv gewichteten Wertes eines ersten Pixels (11), das sich oberhalb des gegenwärtigen Pixels in der benachbarten Zeile des gegenwärtigen Halbbildes (Fm) befindet, und eines adaptiv gewichteten Wertes eines zweiten Pixels (13), das sich unterhalb des gegenwärtigen Pixels in der benachbarten Zeile des gegenwärtigen Halbbildes (Fm) befindet, berechnet wird, wobei die Wichtungsfaktoren ($\alpha$, $\beta$) unter Verwendung eines ersten Gradienten ($\Delta_3$) zwischen dem Wert des zweiten Pixels und dem Wert des ersten Pixels berechnet werden, dadurch gekennzeichnet, daß die Berechnung des ersten Wichtungsfaktors ($\alpha$) für den ersten Pixelwert (11) auf einem zweiten Gradienten ($\Delta_1$) zwischen dem Wert eines vierten Pixels des vorhergehenden Halbbildes (Fm-1) erfolgt, das sich räumlich unterhalb eines dritten Pixels befindet, wobei das dritte Pixel sich an derselben räumlichen Position befindet wie das gegenwärtige Pixel, aber in dem vorhergehenden Halbbild (Fm-1), und daß die Berechnung für den zweiten Wichtungsfaktor ($\beta$) für den zweiten Pixelwert (13) auf einem dritten Gradienten ($\Delta_2$) zwischen dem Wert des dritten Pixels und dem Wert eines fünften Pixels des vorhergehenden Halbbildes (Fm-1) beruht, das sich räumlich oberhalb des dritten Pixels befindet, wobei der Wert sowohl des zweiten ($\Delta_1$) als auch des dritten ($\Delta_2$) Gradienten modifiziert wird, wenn ein Vorzeichen des jeweiligen zweiten oder dritten Gradienten sich von dem Vorzeichen des ersten Gradienten ($\Delta_3$) unterscheidet.

2. Verfahren nach Anspruch 1, bei dem eine kleine Menge ($\varepsilon$), z.B. ein LSB, dem absoluten Wert des zweiten und dritten Gradienten ($\Delta_1$, $\Delta_2$) hinzugefügt wird, um den ersten und den zweiten Wichtungsfaktor zu bilden.

3. Verfahren nach Anspruch 1 oder 2, bei dem - wenn der erste Gradient ($\Delta_3$) größer als oder gleich null ist - der modifizierte zweite Gradient ($\underline{\Delta}_{1a}$) gleich dem Maximum des zweiten Gradienten ($\underline{\Delta}_{1a}$) und null ist, und der modifizierte dritte Gradient ($\underline{\Delta}_{2a}$) gleich dem Maximum des dritten Gradienten ($\underline{\Delta}_{2a}$) und null ist, und bei dem - wenn der erste Gradient ($\Delta_3$) kleiner als null ist - der modifizierte zweite Gradient ($\underline{\Delta}_{1a}$) gleich dem Minimum des zweiten Gradienten ($\underline{\Delta}_{1a}$) und null ist, und der modifizierte dritte Gradient ($\underline{\Delta}_{2a}$) gleich dem Minimum des dritten Gradienten ($\underline{\Delta}_{2a}$) und null ist.

4. Verfahren nach Anspruch 3, bei dem gemäß dem zweiten und dritten modifizierten Gradienten ein vierter ($\underline{\Delta}_{1b}$) und fünfter ($\underline{\Delta}_{2b}$) modifizierter Gradient unter Verwendung entsprechender Pixelwerte aus dem dem gegenwärtigen Halbbild (Fm) folgenden Halbbild (Fm+1) in einer Weise analog zu dem zweiten und dritten Gradienten berechnet wird, und bei dem der erste Wichtungsfaktor ($\alpha$) die absoluten Werte des zweiten ($\underline{\Delta}_{1b}$) und des vierten ($\underline{\Delta}_{1a}$) modifizierten Gradienten enthält, und der zweite Wichtungsfaktor ($\beta$) die absoluten Werte des dritten ($\underline{\Delta}_{2a}$) und des fünften ($\underline{\Delta}_{2b}$) modifizierten Gradienten enthält.

5. Verfahren nach Anspruch 4, bei dem der erste und zweite Wichtungsfaktor ($\alpha$, $\beta$) unter Verwendung eines eine Bewegung anzeigenden Faktors modifiziert wird, der unter Verwendung der absoluten Werte der Differenz zwischen dem zweiten ($\Delta_{1a}$) und dem vierten ($\Delta_{1b}$) Gradienten und der Differenz zwischen dem dritten ($\Delta_{2a}$) und dem fünften ($\Delta_{2b}$) Gradienten berechnet wird.

6. Vorrichtung zur adaptiven Interpolation, umfassend Mittel (582, 591, 593 - 596) zur Berechnung des Wertes eines zu interpolierenden gegenwärtigen Pixels (12) einer gegenwärtigen Zeile (y, n, Li) unter Verwendung eines adaptiv gewichteten Wertes eines ersten Pixels (11), das sich oberhalb des gegenwärtigen Pixels in der benachbarten Zeile des gegenwärtigen Halbbildes (Fm) befindet, und eines adaptiv gewichteten Wertes eines zweiten Pixels (13), das sich unterhalb des gegenwärtigen Pixels in der benachbarten Zeile des gegenwärtigen Halbbildes (Fm) befindet, wobei die Wichtungsfaktoren ($\alpha$, $\beta$) unter Verwendung eines ersten Gradienten ($\Delta_3$) zwischen dem Wert des zweiten Pixels und dem Wert des ersten Pixels berechnet werden, dadurch gekennzeichnet, daß die Mittel (582, 591, 593 - 596) zur Berechnung des Wertes des gegenwärtigen Pixels ferner Mittel (511 - 516, 522, 524, 581, 592, 57) zur Berechnung des ersten Wichtungsfaktors ($\alpha$) für den ersten Pixelwert (11) unter Verwendung eines zweiten Gradienten ($\Delta_1$) zwischen dem Wert eines vierten Pixels des vorhergehenden Halbbildes (Fm-1), das sich räumlich unter einem dritten Pixel befindet, umfassen, wobei das dritte Pixel sich an derselben räumlichen Position befindet wie das gegenwärtige Pixel, aber in dem vorhergehenden Halbbild (Fm-1), und daß die Mittel (582, 591, 593 - 596) zur Berechnung des Wertes des gegenwärtigen Pixels ferner Mittel (511 - 516, 521, 523, 581, 592, 57) zur Berechnung des zweiten Wichtungsfaktors ($\beta$) für den zweiten Pixelwert (13) unter Verwendung eines dritten Gradienten ($\Delta_2$) zwischen dem Wert des dritten Pixels und dem Wert eines fünften Pixels des vorhergehenden Halbbildes (Fm-1), das sich räumlich über dem dritten Pixel befindet, umfassen,

und daß die Vorrichtung ferner Mittel (56, 531 - 534, 541 - 544, 551 - 554) zur Modifizierung des Wertes sowohl des zweiten ($\Delta_1$) als auch des dritten ($\Delta_2$) Gradienten umfaßt, wenn ein Vorzeichen des jeweiligen zweiten oder dritten Gradienten sich von dem Vorzeichen des ersten Gradienten ($\Delta_3$) unterscheidet.

**Revendications**

1. Méthode d'interpolation adaptive, dans laquelle la valeur d'un élément d'image en cours (12) d'une ligne en cours (y, n, Li) à interpoler est calculée en utilisant une valeur pondérée de manière adaptive d'un premier élément d'image (11) situé au-dessus de l'élément d'image en cours dans la ligne adjacente de la trame en cours (Fm) et une valeur pondérée de manière adaptive d'un deuxième élément d'image (13) situé en-dessous de l'élément d'image en cours dans la ligne adjacente de la trame en cours (Fm), dans laquelle les facteurs de pondération ($\alpha$, $\beta$) sont calculés en utilisant un premier gradient ($\Delta_3$) entre la valeur dudit deuxième élément d'image et la valeur dudit premier élément d'image, **caractérisée** en ce que le calcul du premier facteur de pondération ($\alpha$) de la valeur dudit premier élément d'image (11) est fondé sur un deuxième gradient ($\Delta_1$) entre la valeur d'un quatrième élément d'image de la trame précédent (Fm-1) situé spatialement en-dessous d'un troisième élément d'image, ledit troisième élément d'image étant situé à la même position spatiale que l'élément d'image en cours mais dans la trame précédent (Fm-1), et en ce que le calcul du deuxième facteur de pondération ($\beta$) de la valeur dudit deuxième élément d'image (13) est fondé sur un troisième gradient ($\Delta_2$) entre la valeur dudit troisième élément d'image et la valeur d'un cinquième élément d'image de la trame précédent (Fm-1) situé spatialement au-dessus dudit troisième élément d'image, et dans laquelle la valeur de chacun desdits deuxième ($\Delta_1$) et troisième ($\Delta_2$) gradients est modifiée si un signe desdits deuxième et troisième gradients respectifs diffère du signe dudit premier gradient ($\Delta_3$).

2. Méthode selon la revendication 1, dans laquelle une petite quantité ($\varepsilon$), p. ex. 1 bit de poids faible, est ajoutée à la valeur absolue desdits deuxième et troisième gradients ($\Delta_1$, $\Delta_2$) pour former lesdits premier et deuxième facteurs de pondération.

3. Méthode selon la revendication 1 ou 2, dans laquelle, si ledit premier gradient ($\Delta_3$) est supérieur ou égal à zéro, le deuxième gradient modifié ($\underline{\Delta}_{1a}$) est égal au maximum dudit deuxième gradient ($\Delta_{1a}$) et zéro, et le troisième gradient modifié ($\underline{\Delta}_{2a}$) est égal au maximum dudit troisième gradient ($\Delta_{2a}$) et zéro, et dans laquelle, si ledit premier gradient ($\Delta_3$) est inférieur à zéro, le deuxième gradient modifié ($\underline{\Delta}_{1a}$) est égal au minimum dudit deuxième gradient ($\Delta_{1a}$) et zéro, et le troisième gradient modifié ($\underline{\Delta}_{2a}$) est égal au minimum dudit troisième gradient ($\Delta_{2a}$) et zéro.

4. Méthode selon la revendication 3, dans laquelle, conformément auxdits deuxième et troisième gradients modifiés, un quatrième ($\underline{\Delta}_{1b}$) et un cinquième ($\underline{\Delta}_{2b}$) gradients modifiés sont calculés en utilisant des valeurs d'éléments d'image respectives de la trame (Fm+1) suivant ladite trame en cours (Fm) d'une manière analogue aux deuxième et troisième gradients, et dans laquelle ledit premier facteur de pondération ($\alpha$) comporte les valeurs absolues desdits deuxième ($\underline{\Delta}_{1a}$) et quatrième ($\underline{\Delta}_{1b}$) gradients modifiés et ledit deuxième facteur de pondération ($\beta$) comporte les valeurs absolues desdits troisième ($\underline{\Delta}_{2a}$) et cinquième ($\underline{\Delta}_{2b}$) gradients modifiés.

5. Méthode selon la revendication 4, dans laquelle lesdits premier et deuxième facteurs de pondération ($\alpha$, $\beta$) sont modifiés en utilisant un facteur indicatif de mouvement qui est calculé en utilisant les valeurs absolues de la différence entre lesdits deuxième ($\Delta_{1a}$) et quatrième ($\Delta_{1b}$) gradients et la différence entre lesdits troisième ($\Delta_{2a}$) et cinquième ($\Delta_{2b}$) gradients.

6. Appareil d'interpolation adaptive, comprenant des moyens (582, 591, 593-596) pour calculer la valeur d'un élément d'image en cours (12) d'une ligne en cours (y, n, Li) à interpoler en utilisant une valeur pondérée de manière adaptive d'un premier élément d'image (11) situé au-dessus de l'élément d'image en cours dans la ligne adjacente de la trame en cours (Fm) et une valeur pondérée de manière adaptive d'un deuxième élément d'image (13) situé en-dessous de l'élément d'image en cours dans la ligne adjacente de la trame en cours (Fm), dans lequel les facteurs de pondération ($\alpha$, $\beta$) sont calculés en utilisant un premier gradient ($\Delta_3$) entre la valeur dudit deuxième élément d'image et la valeur dudit premier élément d'image, **caractérisé** en ce que les moyens (582, 591, 593- 596) de calcul de la valeur de l'élément en cours comprennent en outre des moyens (511-516, 522, 524, 581, 592, 57) pour calculer le premier facteur de pondération ($\alpha$) de la valeur dudit premier élément d'image (11) en utilisant un deuxième gradient ($\Delta_1$) entre la valeur d'un quatrième élément d'image de la trame précédent (Fm-1) situé spatialement en-dessous d'un troisième élément d'image, ledit troisième élément d'image étant situé à la même position spatiale que l'élément d'image en cours mais dans la trame précédent (Fm-1), et en ce que les moyens (582, 591, 593-596) pour calculer la valeur de l'élément d'image en cours comprennent en outre des moyens (511-516, 521, 523, 581, 592, 57) pour calculer le deuxième facteur de pondération ($\beta$) de la valeur dudit deuxième élément d'image (13) en utilisant un troisième gradient ($\Delta_2$) entre la valeur dudit troisième élément d'image et la valeur d'un cinquième élément d'image de la trame précédent (Fm-1) situé spatialement au-dessus dudit troisième élément d'image, et dans lequel l'appareil comprend en outre des moyens (56, 531-534, 541-544, 551-554) pour modifier la valeur de chacun desdits deuxième ($\Delta_1$) et

troisième ($\Delta_2$) gradients si un signe desdits deuxième et troisième gradients respectifs diffère du signe dudit premier gradient ($\Delta_3$).

Fig.1

EP 0 575 862 B1

Fm

Fig. 2A

Fm-1

Fig. 2B

Fm

Fig. 3A

Fm-1

Fig. 3B

Fm

Fig. 4A

Fm-1

Fig. 4B

10

Fig.5